# EUROPEAN PATENT APPLICATION

(11) **EP 1 376 283 A1**
(43) Date of publication of application: **02.01.2004**
(21) Application number: 03251030.7
(22) Date of filing: 20.02.2003
(51) Int. Cl.: G05B 19/418

(54) **Method and system for controlling manufacturing information**

(30) Priority: 24.05.2002 JP 2002151433
(71) Applicant: Big Daishowa Seiki Co., Ltd., Higashi-Osaka-shi 579-8013 (JP); Big Alpha Co., Inc., Goshikicho Tsuna-gun, Hyogo 656-2400 (JP)
(72) Inventor: Komine, Tsuyoshi, Big Alpha Co., Inc., Tsuna-gun, Hyogo 656-2400 (JP); Sawamura, Isao, Big Daishowa Seiki CO., Ltd., Higashi-Osaka-shi, Osaka 579-8013 (JP); Nakajima, Hidehito, Big Daishowa Seiki Co., ltd., Higashi-Osaka-shi, Osaka 579-8013 (JP)
(74) Representative: McLeish, Nicholas Alistair Maxwell

(57) **Abstract**

Method and system for controlling manufacturing information using a manufacturing plant's computer (2), which is installed at a site of a manufacturing plant equipped with machine tool equipment (1), and supplier's computer (3), which is installed at a site of a supplier that supplies the machine tool equipment, wherein these computers are connected to each other via a network to enable communication therebetween. The manufacturing information control method comprises the steps of: acquiring specified identification information stored on a recording medium mounted on the machine tool equipment (1); acquiring specified service information by accessing the supplier's computer (3) on the basis of the specified identification information; and presenting the specified service information to the user.

## Description

### BACKGROUND OF THE INVENTION

### Field of the Invention

The present invention relates to a manufacturing information control method and a system for achieving this method. More specifically, this invention relates to a manufacturing information control method which is practiced between a manufacturing plant and a machine tool equipment manufacturer (or supplier) which supplies machine tool equipment used at the manufacturing plant, and this invention also relates to a system for achieving this method.

### Description of the Related Art

Information control systems used at manufacturing plants and other places can efficiently control various kinds of information about machine tool equipment such as machining centers (M/C) and tool presetters. Particularly in recent times, information control systems using an IC code system made their debut, thereby realizing highly advanced information control.

This IC code system makes it possible to read information (or identification information) about a tool, one part of machine tool equipment, by using a radio frequency (RF) antenna through a non-contact method (or electromagnetic induction method), by attaching to the tool a small-sized IC chip with the identification information stored thereon. Accordingly, for example, it is possible to transfer the identification information, which has been read by the RF antenna, to the relevant machine tool so as to cause the identification information to be reflected in control information, and it is also possible to manage the location of the relevant tool by entering the necessary data into an administrative computer, thereby allowing further automation within the manufacturing plant.

In order for a user to utilize the machine tool equipment, he/she requires a variety of information about the machine tool equipment, including identification information, work information such as the tool attachment position and arrangement of the tool, and manual information.

However, the above-described conventional information control system that utilizes the IC code system cannot control this kind of information about the machine tool equipment in an integrated manner. Moreover, once the machine tool equipment is delivered from the supplier to the manufacturing plant, the user is unable to acquire the latest information about the machine tool equipment (such as new product information) in real time. Accordingly, it is impossible to make effective use of the information control system.

On the other hand, the supplier also desires to provide the latest information in real time about the machine tool equipment delivered to the user, and also to collect from the user information that is necessary for maintenance.

### SUMMARY OF THE INVENTION

It is the object of the present invention to provide the manufacturing information control method and the system for achieving this method, that enable the user who utilizes the machine tool equipment to easily acquire necessary information from the supplier in real time and also enable the supplier to acquire necessary information from the user.

The invention that achieves the above-described object is a manufacturing information control method practiced by using a manufacturing plant's computer, which is installed at a site of a manufacturing plant equipped with machine tool equipment, and a supplier's computer, which is installed at a site of a supplier that supplies the machine tool equipment, wherein these computers are connected to each other via a network to enable communication therebetween. The manufacturing information control method comprises the steps of: acquiring specified identification information stored on a recording medium mounted on the machine tool equipment; acquiring specified service information by accessing the supplier's computer via the network on the basis of the specified identification information; and displaying the specified service information on the manufacturing plant's computer screen.

The above-described method invention can be also realized as a product invention (as a device or system). Specifically, this invention is a manufacturing information control system constructed of a manufacturing plant's computer, which is installed at a site of a manufacturing plant equipped with machine tool equipment, and a supplier's computer, which is installed at a site of a supplier that supplies the machine tool equipment, wherein these computers are connected to each other via a network to enable communication therebetween. The system comprises: a recording medium mounted on the machine tool equipment for storing specified identification information; acquiring means for acquiring the specified identification information stored on the recording medium; information acquiring means for acquiring specified service information by accessing the supplier's computer via the network on the basis of the specified identification information; and information presenting means for presenting the specified service information to a user.

Furthermore, the above-described invention can include the following variations.

The specified identification information may be acquired through a non-contact method using an antenna that has been moved closer to the recording medium.

Moreover, the manufacturing plant's computer may retain user information regarding the user in order to acquire the specified service information on the basis of the specified identification information and the user information.

Furthermore, the manufacturing plant's computer and/or the supplier's computer may manage the inventory of the machine tool equipment on the basis of the specified identification information.

In this specification, the term "means" not only indicates any physical means, but also includes cases in which the function of the means is implemented using software. The function of one means may be implemented by more than one physical means, while the functions of more than one means may be implemented by one physical means.

### BRIEF DESCRIPTION OF THE DRAWINGS

Fig. 1 is an explanatory drawing of the entire structure of the system for achieving the information control method according to an embodiment of this invention.
Fig. 2 is a flowchart that illustrates the flow of information processing by the information control system according to the embodiment of this invention.
Fig. 3 illustrates an example of an access history database according to the embodiment of this invention.
Fig. 4 illustrates an example of service information displayed on the screen of the manufacturing plant's computer according to the embodiment of this invention.

### DETAILED DESCRIPTION OF THE PREFERRED EMBODIMENT

An embodiment of this invention is hereinafter described with reference to the attached drawings.

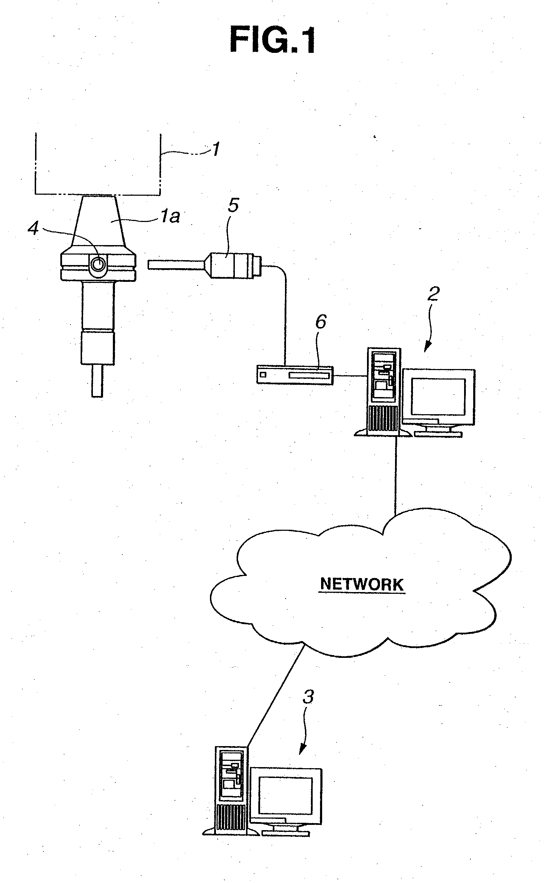

Fig. 1 illustrates the entire structure of the system for achieving the information control method of this invention. This system is constructed by establishing intractive connections, via a network represented by the Internet or the like, between a manufacturing plant where a machine tool 1 such as a machining center or a tool presetter is placed, and a machine tool equipment manufacturer (or supplier) which supplies the machine tool 1.

Fig. 1 shows only one manufacturing plant and one supplier, which are connected via the network. However, the invention is not limited to this structure. One supplier is typically connected to a plurality of manufacturing plants via the network.

A manufacturing plant's computer 2 connected to the manufacturing plant's LAN, collaborates with other computers which are not shown in Fig. 1, and controls, in an integrated manner, a variety of information necessary for the operation of manufacturing lines in the manufacturing plant. The manufacturing plant's computer 2 contains, for-example, a database system to be implemented under an operating system, thereby realizing the integrated control of the above-mentioned information. The manufacturing plant's computer 2 is also constructed so as to be capable of conducting communications with outside computers (a supplier's computer 3 in this example) via the Internet. In this case, it is desirable that the manufacturing plant's computer 2 contain a Web client program (or Web browser) for utilizing the Web system, and be constructed to be capable of exchanging specified information with the supplier's computer 3 by using the website.

On the other hand, the suppliers computer 3 is connected to the supplier's LAN and controls, in an integrated manner, a variety of information such as information concerning machine tool equipment supplied to the manufacturing plant that is a client. Among this information, information that should be provided to the manufacturing plant is hereinafter referred to as "service information." The supplier's computer 3 also contains, for example, a database system to be implemented under an operating system, thereby realizing the integrated control of the above-mentioned information. The supplier's computer 3 is also constructed so as to be capable of conducting communications with outside computers (the manufacturing plant's computer 2 in this example) via the Internet. The supplier's computer 3 contains a a Web server program (or Web browser) for utilizing the Web system and responds to access made by outside computers.

In the manufacturing plant, machine tools 1 such as machining centers or tool presetters are placed according to the relevant manufacturing line and are connected to the LAN as required. Some machine tools 1 have a tool holding member (or holder) 1a, which holds the tool according to its purpose of processing, and are constructed so that the holder 1a can be exchanged when appropriate. For example, a machining center is equipped with a plurality of tools (or holders) 1a suited to milling or boring, and performs processing by detaching and attaching the holder 1a when appropriate and in accordance with an NC program using an automatic exchange mechanism.

The holder 1a has a small-sized IC chip 4 mounted thereon by means of, for example, a fastening ring, an adhesive, and/or screws. In this example, the IC chip 4 is mounted on the holder 1a, but it may be mounted on the main body of the machine tool 1. This IC chip 4 stores specified identification information within its internal semiconductor circuit. This type of IC chip 4 is sometimes called a "data carrier," "RFID," or "IC tag." The identification information includes, for example, information for identification of the type of the relevant tool, and production number. The information stored in the IC chip 4 can be read using an RF antenna 5. An IC reader 6 reads the identification information stored in the IC chip 4, using the RF antenna 5 that has been moved closer to the IC chip 4, and then sends the identification information to the manufacturing plant's computer 2.

As mentioned above, the manufacturing plant's computer 2 controls, in an integrated manner, a variety of information necessary for the operation of the manufacturing lines by using the database system. The manufacturing plant's computer 2 typically controls specification information (including photographs and drawings), inventory information, history of use information (including total use time), user information, and other information concerning tools corresponding to each holder 1a. The manufacturing plant's computer 2 can calculate a tool compensation value that has been output from the NC program on the basis of the identification information read from the IC chip 4 using the RF antenna 5, and can send the tool compensation value to the machine tool 1. Moreover, the manufacturing plant's computer 2 controls user information (such as a user ID and a user password) regarding a user (or manager) of the machine tool equipment. The manufacturing plant's computer 2 can access the supplier's computer 3, as required, using the website according to the identification information read from the IC chip 4.

As described above, the supplier's computer 3 controls, in an integrated manner, a variety of service information, including information regarding the machine tool equipment supplied to the manufacturing plant, by using the database system. Examples of the service information include the machine tool equipment instruction manuals, recommended use conditions or specifications, or new product information to be provided to clients. When accepting access from the manufacturing plant's computer 2 by using the website, the supplier's computer 3 searches, in response to the access, for desired service information in the database system and sends the service information to the manufacturing plant's computer 2.

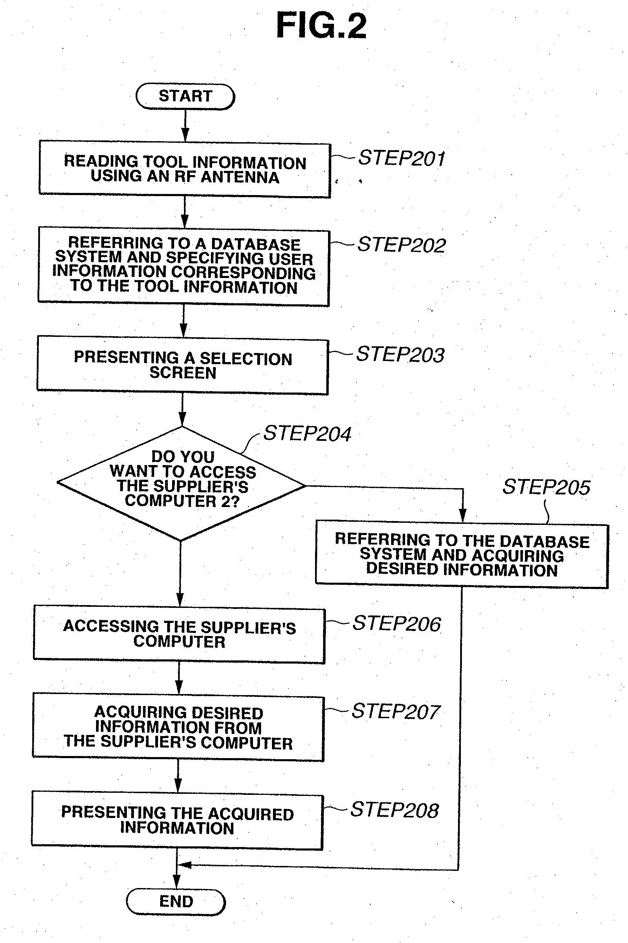

The flow of information processing by the information control system constructed as described above is hereinafter explained with reference to Fig. 2.

Firstly, the manufacturing plant's computer 2 acquires the identification information read by the IC reader 6 using the RF antenna 5 that has been moved closer to the IC chip 4 mounted on the holder 1a (STEP 201). The identification information may be read from the IC chip 4 by automatically moving the RF antenna or by manually or semi-manually moving the RF antenna closer to the IC chip 4. Subsequently, the manufacturing plant's computer 2 refers to the database system on the basis of the identification information that has been read, and extracts the user information corresponding to the identification information (STEP 202).

In the state where the manufacturing plant's computer 2 has collected the identification information and the user information, the manufacturing plant's computer 2, for example, presents a Web screen to the user, thereby urging the user to select the information he/she wishes to acquire (STEP 203). When the user selects the information he/she wishes to acquire via the Web screen, the manufacturing plant's computer 2 determines whether or not the information exists in the supplier's computer 3 (STEP 204).

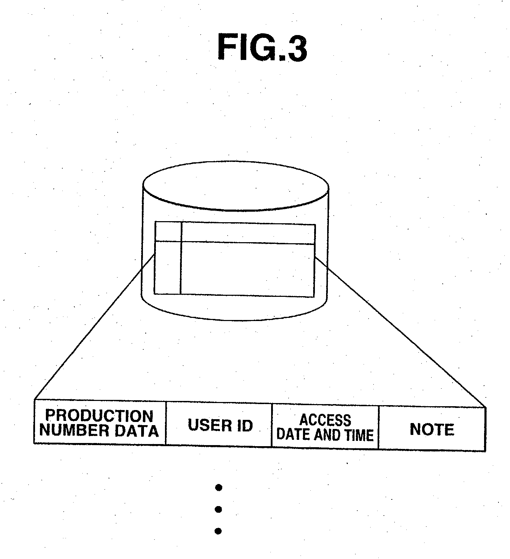

When the manufacturing plant's computer 2 determines that the information exists in its own database system (when "NO" is selected in STEP 204), it refers to its own database and searches for the requested information on the basis of the identification information and the user information (STEP 205). At this time, the manufacturing plant's computer 2 records the access history information in its own database. Fig. 3 illustrates an example of the access history database according to this embodiment. As shown in Fig. 3, the access history database has separate fields for "production number data," "user ID," "access date and time," and "note." The "production number data" is a production number of the machine tool equipment. The "user ID" is a user ID utilized when logging into the system. The "access date and time" are time stamps at the time of access to the database regarding the service information. The "note" is history information regarding the use conditions of the tool and the like and, for example, accumulated use time and other information are recorded therein.

The manufacturing plant's computer 2, which has recorded the access history information in the access history database, presents the information acquired from the database system on the screen (STEP 208).

On the other hand, when the manufacturing plant's computer 2 determines that the information exists in the database system of the supplier's computer 3 (when "YES" is selected in STEP 204), it accesses the supplier's computer 3 via the Internet (STEP 206). In this case, it is desirable that the manufacturing plant's computer 2 sends the identification information and the user information together with a request for the acquisition of the information to the supplier's computer 3. However, it is not necessary for the manufacturing plant's computer 2 to send both the identification information and the user information, but it may instead send either one of them.

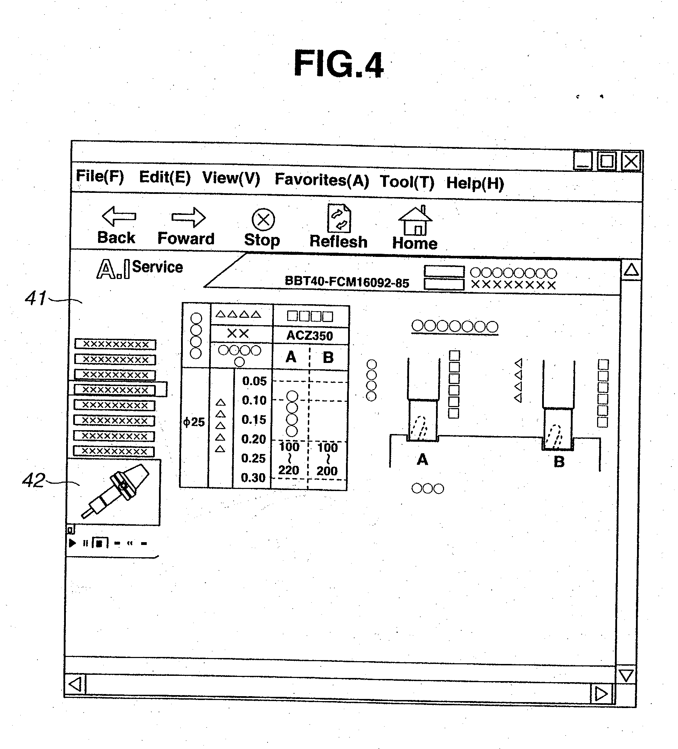

In response to access by the manufacturing plant's computer 2, the supplier's computer 3 refers to its own database system and searches for and sends the requested service information to the manufacturing plant's computer 2. At this time, the supplier's computer 3 records the access history information in its own database. The contents of the access history information are similar to those of the manufacturing plant's computer 2. The manufacturing plant's computer 2 receives the service information sent from the supplier's computer 3 (STEP 207) and displays the service information on the screen (STEP 208). Fig. 4 illustrates an example of the service information displayed on the screen of the manufacturing plant's computer 2. As shown in Fig. 4, the service information including recommended conditions of the holder 1a is displayed on the browser screen of the manufacturing plant's computer 2. This browser screen has a menu 41 so that the user can acquire different service information by selecting a desired menu item. Other service information that has been prepared and appears as menu items include, for example, "catalogues," "accessories," "instruction manuals," and "processing examples." Moreover, the user can browse moving image information regarding the relevant machine tool or equipment (the holder 1a in this example) in the moving image area 42 on the browse screen.

According to this embodiment as described above, the manufacturing plant's computer 2 can easily acquire a variety of information regarding the machine tool equipment in real time.

Specifically according to this embodiment, by causing the supplier's computer 3 to retain a variety of service information concerning the machine tool equipment, including the machine tool equipment instruction manuals, recommended use conditions or specifications, and new product information to be provided to clients, and by causing the manufacturing plant's computer 2 to send the information acquisition request containing the identification information and/or the user information to the supplier's computer 3, it is possible to easily acquire the requested service information regarding the machine tool equipment from the supplier's computer 3 in real time.

Moreover, according to this embodiment, the identification information is read from the IC chip 4 mounted on the holder 1a and/or the main body of the machine tool 1, using the RF antenna 5, and desired information is then acquired from the supplier's computer 3 on the basis of the identification information that has been read. Accordingly, it is possible to acquire the information very quickly and easily.

Furthermore, according to this embodiment, the supplier's computer 3 can acquire necessary information from the manufacturing plant's computer 2 by accessing the manufacturing plant's computer 2 when appropriate. Therefore, the supplier can ascertain, for example, the use conditions of the machine tool equipment at the site of the manufacturing plant that is a client of the supplier.

The above-described embodiment is merely an illustration of this invention, and it is not intended to limit this invention to the above embodiment alone. This invention can be implemented in many variations unless such variations deviate from the gist of the invention. For example, the actions of the means for implementing the aforementioned functions have been described in sequential order, but the invention is not limited to this order. Accordingly, as long as no contradiction arises in the actions, the order of the processing may be changed or the invention may be configured so as to allow certain actions to take place simultaneously.

According to this invention, the user who utilizes the machine tool equipment can easily acquire the necessary information in real time from the supplier.

Moreover, according to this invention, the supplier can acquire the necessary information from the user.

## Claims

1. A manufacturing information control method using a manufacturing plant's computer and a supplier's computer, being connected to each other via a network to enable communication therebetween,
the manufacturing plant's computer being installed at a site of a manufacturing plant equipped with machine tool equipment,
the supplier's computer being installed at a site of a supplier that supplies the machine tool equipment, and
the method comprising the steps of:
acquiring specified identification information stored on a recording medium mounted on the machine tool equipment;
acquiring specified service information by accessing the supplier's computer via the network on the basis of the specified identification information; and
displaying the specified service information on the manufacturing plant's computer screen.

2. The manufacturing information control method according to claim 1, wherein the specified identification information is acquired through an antenna that has been moved closer to the recording medium.

3. The manufacturing information control method according to claim 1 or 2, further comprising the step of retaining user information regarding a user,
wherein the specified service information is acquired on the basis of the specified identification information and the user information.

4. The manufacturing information control method according to claim 1 or 2, further comprising the step of managing the inventory of the machine tool equipment on the basis of the specified identification, information.

5. The manufacturing information control method according to claim 1, further comprising the step of retaining user information regarding a user,
wherein the specified service information is acquired on the basis of the specified identification information and the user information, and
wherein the method further comprises the step of managing the inventory of the machine tool equipment on the basis of the specified identification information.

6. The manufacturing information control method according to claim 1, further comprising the step of acquiring the specified identification information through an antenna that has been moved closer to the recording medium, and retaining user information regarding a user,
wherein the specified service information is acquired on the basis of the specified identification information and the user information, and
wherein the method further comprises the step of managing the inventory of the machine tool equipment on the basis of the specified identification information.

7. A manufacturing information control system constructed of a manufacturing plant's computer and a supplier's computer, being connected to each other via a network to enable communication therebetween,
the manufacturing plant's computer being installed at a site of a manufacturing plant equipped with machine tool equipment,
the supplier's computer being installed at a site of a supplier that supplies the machine tool equipment, and
the system comprising:
a recording medium mounted on the machine tool equipment for storing specified identification information;
acquiring means for acquiring the specified identification information stored on the recording medium;
information acquiring means for acquiring specified service information by accessing the supplier's computer via the network on the basis of the specified identification information; and
information presenting means for presenting the specified service information to a user.

8. The manufacturing information control system according to claim 7, wherein the acquiring means is an RF antenna constructed so as to be capable of reading the specified identification information in the state where it has been moved closer to the recording medium.

9. The manufacturing information control system according to claim 7 or 8, further comprising a storing means for retaining user information regarding the user,
wherein the information acquiring means acquires the specified service information on the basis of the specified identification information and the user information.

10. The manufacturing information control system according to claim 7 or 8, further comprising a managing means for managing the inventory of the machine tool equipment on the basis of the specified identification information.

11. The manufacturing information control system according to claim 7, further comprising a storing means for retaining user information regarding the user,
wherein the information acquiring means acquires the specified service information on the basis of the specified identification information and the user information, and
wherein the system further comprises a managing means for managing the inventory of the machine tool equipment on the basis of the specified identification information.

12. The manufacturing information control system . according to claim 7,
wherein the acquiring means is an RF antenna constructed so as to be capable of reading the specified identification information in the state where it has been moved closer to the recording medium,
wherein the system further comprises a storing means for retaining user information regarding the user,
wherein the information acquiring means acquires the specified service information on the basis of the specified identification information and the user information, and
wherein the system further comprises managing means for managing the inventory of the machine tool equipment on the basis of the specified identification information.
